## Europäisches Patentamt

## European Patent Office

## Office européen des brevets

(19)

(11) Veröffentlichungsnummer: **0 089 049**

**A2**

(12) # EUROPÄISCHE PATENTANMELDUNG

(21) Anmeldenummer: **83102503.6**

(22) Anmeldetag: **14.03.83**

(51) Int. Cl.³: **H 02 H 9/02**

(30) Priorität: **17.03.82 DE 3209754**

(43) Veröffentlichungstag der Anmeldung:
**21.09.83 Patentblatt 83/38**

(84) Benannte Vertragsstaaten:
**AT BE CH FR GB IT LI NL SE**

(71) Anmelder: **SIEMENS AKTIENGESELLSCHAFT**
**Berlin und München Wittelsbacherplatz 2**
**D-8000 München 2(DE)**

(72) Erfinder: **Chadwick, P.N.R., Dipl.-Phys.**
**Kirchweg 10**
**D-8911 Petzenhausen(DE)**

(54) **Anordnung zum Unterdrücken von Einschaltstromspitzen in einem Versorgungsnetz.**

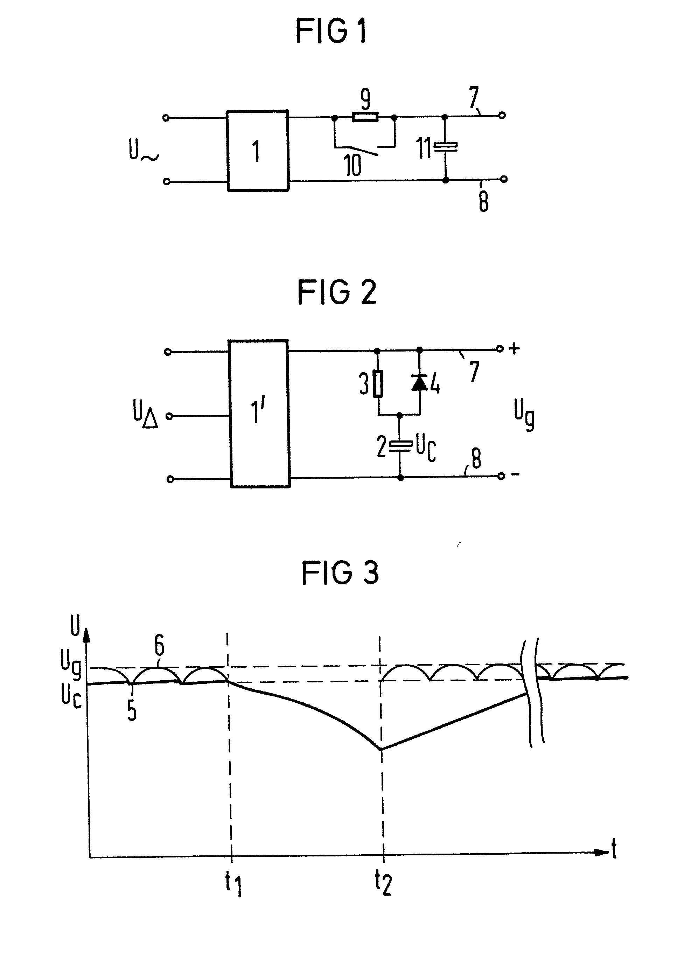

(57) Die Erfindung betrifft eine Anordnung zum Unterdrücken von Einschaltstromspitzen in einem Versorgungsnetz, welches über eine erste Gleichrichteranordnung (1') und einen Gleichspannungsleiter (7) mit einem Verbraucher verbunden ist. Der Gleichspannungsleiter ist über einen Ladezweig, welcher einen Ohmschen Widerstand (3) aufweist, und über einen Entladezweig, welcher eine zweite Gleichrichteranordnung (4) aufweist, mit einem Energiespeicher (2) verbunden. Beim Einschalten des Verbrauchers wird der Energiespeicher (2) über den Ladezweig aufgeladen. Im ungestörten Betrieb wird der Energiespeicher (2) nicht entladen. Sobald die Eingangsspannung am Gleichrichter (1') unterbrochen wird, wird dem Energiespeicher (2) über die Diode (4) Strom entnommen, da die Spannung am Verbraucher kleiner wird wie die Spannung am Energiespeicher (2). Wenn die Eingangsspannung wieder anliegt, wird der Energiespeicher sanft aufgeladen (Figur 2).

FIG 2

0089049

SIEMENS AKTIENGESELLSCHAFT
BERLIN UND MÜNCHEN

Unser Zeichen

VPA 82 P 1 1 8 5 E

Anordnung zum Unterdrücken von Einschaltstromspitzen in einem Versorgungsnetz

Die Erfindung betrifft eine Anordnung zum Unterdrücken von Einschaltstromspitzen in einem Versorgungsnetz, welches über eine erste Gleichrichteranordnung und eine Gleichspannungsleitung mit einem Verbraucher verbunden ist.

Zum Betreiben eines Verbrauchers, welcher eine Gleichspannung erfordert, kann die Gleichspannung aus einem Versorgungsnetz abgeleitet werden. Das Versorgungsnetz kann beispielsweise mit einer Wechselspannung beaufschlagt sein. Dazu wird die Wechselspannung einem Gleichrichter zugeführt, an dessen Ausgang die Gleichspannung abgegriffen und dem Verbraucher zugeführt wird. Die Gleichspannung kann von einer störenden Wechselspannung überlagert sein, die auch als Brummen oder Welligkeit bezeichnet wird. Um diese störende Wechselspannung zu unterdrücken, kann zwischen dem Gleichspannungsleiter und einem Bezugspotentialleiter ein Glättungskondensator geschaltet sein. Die periodische Aufladung des Glättungskondensators kann jedoch Stromspitzen verursachen, die ein Vielfaches der Nenn-Netzstromstärke erreichen können. Besonders beim Einschalten des Verbrauchers, wenn der Glättungskondensator entladen ist, kann es zu sehr hohen Strömen kommen. Die Stromspitzen stellen eine starke Belastung des Gleichrichters, des Glättungskondensators und des Versorgungsnetzes dar. Sie können auch auf weitere Verbraucher, die am Versorgungsnetz angeschlossen sind, störend wirken.

Lg 1 Stl / 17.03.82

Zur Begrenzung der Einschaltstromspitzen ist aus der DE-OS 30 06 565 bekannt, zwischen dem Gleichrichter und dem Glättungskondensator einen Vorwiderstand zu schalten, welcher nach einer vorbestimmten Zeit, oder wenn die Kondensatorspannung einen vorbestimmten Wert erreicht hat, überbrückt wird.

Nachteilig an dieser Anordnung ist, daß bei jeder Halbwelle der Wechselspannung Stromspitzen auftreten. Bekanntlich verursachen diese Stromspitzen Netzoberwellenströme, welche zu einer Verzerrung der Netzspannung führen und für weitere Verbraucher am Versorgungsnetz störend wirken können. Weiter ist nachteilig, daß bei einem Ausfall der Wechselspannung die Überbrückung des Vorwiderstandes nicht unterbrochen werden kann. Somit können beim Wiedereinsetzen der Wechselspannung hohe Einschaltstromspitzen auftreten. Die elektronischen Mittel, welche zur Überbrückung des Vorwiderstandes notwendig sind, sind auch ein nennenswerter Kostenfaktor.

Der Erfindung lag daher die Aufgabe zugrunde, eine Anordnung der obengenannten Art anzugeben, welche aus einfachen Mitteln aufgebaut ist.

Diese Aufgabe wird dadurch gelöst, daß der Gleichspannungsleiter über einen Ladezweig, welcher einen Ohmschen Widerstand aufweist, und über einen Entladezweig, welche eine zweite Gleichrichteranordnung aufweist, mit einem Energiespeicher verbunden ist, welcher mit einem Bezugspotentialleiter verbunden ist.

Diese Anordnung hat den Vorteil, daß der Energiespeicher beim Einschalten der Spannung auf dem Versorgungsnetz oder beim Wiedereinsetzen der Spannung nach dem Ausfall sanft aufgeladen wird. Dem Energiespeicher wird nur bei einem Ausfall der Spannung am Versorgungsnetz Strom entnommen. Ladestromspitzen sind vernachlässigbar klein. Die Anordnung bewirkt also eine Reduzierung der Stromspitzen und damit der Oberwellenanteile. Außerdem wird die Belastung des Energiespeichers verringert. Dadurch wird die Lebensdauer des Verbrauchers erhöht und der Wirkungsgrad des Verbrauchers verbessert. Da keine Schaltmittel zur Überbrückung des Widerstandes und keine Mittel zur Ansteuerung des Schalters erforderlich sind, ist die Anordnung sehr kostengünstig.

Im folgenden wird die Erfindung anhand eines bevorzugten Ausführungsbeispieles weiter beschrieben.

FIG 1    zeigt schematisch eine bekannte Anordnung zur Begrenzung von Einschaltstromspitzen

FIG 2    zeigt eine Anordnung zum Unterdrücken von Einschaltstromspitzen gemäß der Erfindung

FIG 3    zeigt Verläufe von Gleichspannungen gemäß FIG 2

FIG 1    zeigt eine erste Gleichrichteranordnung 1, an deren Eingängen ein Versorgungsnetz mit einer Eingangswechselspannung u~ anliegt. Ein Ausgang der ersten Gleichrichteranordnung 1 ist über eine Gleichspannungsleitung 7 mit einem Verbraucher (nicht dargestellt) verbunden. Ein weiterer Ausgang der ersten Gleichrichteranordnung 1 ist über eine Bezugspotentialleitung 8 ebenfalls mit dem Verbraucher verbunden. Zwischen dem Gleichspannungsleiter 7 und dem Bezugspotentialleiter 8 ist ein Glättungskondensator 11 geschaltet. Zwischen der ersten Gleichrichteranordnung 1 und dem Glättungskondensator 11 liegt im Gleichspannungsleiter 7 ein Vorwiderstand 9. Parallel zum Vorwiderstand 9 liegt ein elektronischer Schalter 10 zum Überbrücken des Widerstandes 9. Der Schalter 10 kann beispielsweise aus einem Thyristor bestehen, welcher über Ansteuerungsmittel elektronisch gesteuert wird. Mittels der ersten Gleichrichteranordnung 1 wird aus der Eingangswechselspannung $u_\sim$ eine Gleichspannung abgeleitet, welche am Gleichspannungsleiter 7 abgreifbar ist.

Beim Einschalten des Verbrauchers, wenn der Glättungskondensator 11 entladen ist, können sehr hohe und schädliche Eingangsstromspitzen im Versorgungsnetz entstehen. Zum Begrenzen der Einschaltstromspitzen ist daher der Widerstand 9 in die Gleichspannungsleitung 7 geschaltet. Nach einer vorbestimmten Zeit, oder wenn die Spannung am Glättungskondensator 11 einen vorbestimmten Wert erreicht hat, überbrückt der Schalter 10 den Widerstand 9.

Die am Gleichspannungsleiter 7 anliegende Gleichspannung wird von einer Wechselspannung überlagert, die auch "Brummen" oder "Welligkeit" genannt wird. Bei jeder ansteigenden Halbwelle der überlagerten Wechselspannung wird der Glättungskondensator 11 aufgeladen. Bei jeder abfallenden Halbwelle wird der Glättungskondensator 11 entladen. Dadurch wird eine Glättung der Gleichspannung erreicht.

In FIG 2 ist der Eingang einer weiteren ersten Gleichrichteranordnung 1' mit einem Versorgungsnetz verbunden, welches beispielsweise mit einer Eingangswechselspannung $u_\triangle$ beaufschlagt ist. Der Ausgang der ersten Gleichrichteranordnung 1' ist über den Gleichspannungsleiter 7 und den Bezugspotentialleiter 8 mit einem Verbraucher (nicht dargestellt) verbunden.

Die Gleichspannung der ersten Gleichrichteranordnung 1' ist mit $U_g$ bezeichnet. Vorteilhafterweise ist die Eingangswechselspannung $u_\triangle$ einem Drehstromnetz ohne Mittelpunkt entnommen. Somit ist die Gleichspannung $U_g$ nur mit einer Welligkeit $(1 - \cos 30^o)$ behaftet, was einer Welligkeit von ungefähr 13% entspricht. Ist an die erste Gleichrichteranordnung 1' ein Verbraucher angeschaltet, welcher eine derartige Welligkeit ausregeln kann, so ist ein Glättungskondensator überflüssig.

Der Gleichspannungsleiter 7 ist über einen Ladezweig, in welchem ein Ohmscher Widerstand 3 liegt, und über einen Entladezweig, in welchem eine zweite Gleichrichteranordnung 4 liegt, mit einem Energiespeicher 2 verbunden. Dieser ist mit dem Bezugspotentialleiter 8 verbunden. Die Durchlaßrichtung der zweiten Gleichrichteranordnung 4 verläuft vom Energiespeicher 2 zum Gleichspannungsleiter 7.

Vorzugsweise besteht die zweite Gleichrichteranordnung 4 aus einer Diode und der Energiespeicher 2 aus einem Kondensator. Weitere Einzelheiten dieser Anordnung sind zusammen mit FIG 3 beschrieben.

In FIG 3 ist über der Zeit t der Verlauf der Gleichspannung $U_g$ und der Verlauf der Spannung an Energiespeicher 2 dargestellt. Die Spannung am Energiespeicher 2 ist mit $U_c$ bezeichnet. Vor einem Zeitpunkt $t_1$ liegt die Eingangswechselspannung $u_\triangle$ an der ersten Gleichrichteranordnung 1' an. Zum Zeitpunkt t1 wird die Eingangswechselspannung $u_\triangle$ kurz unterbrochen, beispielsweise bei einem Netzausfall. Zum Zeitpunkt t2 ist die Eingangswechselspannung $u_\triangle$ wieder eingeschaltet,

beispielsweise wenn der Netzausfall beendet ist.

Die Gleichspannung $U_g$ ist mit einer Welligkeit behaftet, die von der Eingangswechselspannung $u_\triangle$ abhängt. Die Gleichspannung $U_g$ nimmt aufgrund der Welligkeit bei 5 einen Talwert und bei 6 einen Spitzenwert ein.

Beim Einschalten des Verbrauchers wird der Energiespeicher 2 über den Ladezweig bis auf den Talwert der Gleichspannung $U_g$ aufgeladen. Im ungestörten Betrieb ist die Spannung $U_c$ nahezu konstant. Dem Energiespeicher 2 wird dabei also nahezu kein Strom entnommen. Der ungestörte Verlauf der Spannungen ist bis zum Zeitpunkt t1 dargestellt. Zum Zeitpunkt t1 wird die Gleichspannung $U_g$ am Verbraucher kleiner als die Spannung am Energiespeicher 2, so daß der Energiespeicher 2 über die zweite Gleichrichteranordnung 4 vom Verbraucher entladen wird. Ab dem Zeitpunkt t2 wird der Energiespeicher 2 wieder über den Widerstand 3 langsam, d.h. im Verlauf einiger Halbwellen der überlagerten Wechselspannung, aufgeladen.

3 Figuren

2 Patentansprüche

Patentansprüche

1.    Anordnung zum Unterdrücken von Einschaltstromspitzen in einem Versorgungsnetz, welches über eine erste Gleichrichteranordnung und eine Gleichspannungsleitung mit einem Verbraucher verbunden ist,   d a -   d u r c h   g e k e n n z e i c h n e t , daß die Gleichspannungsleitung (7) über einen Ladezweig, welcher einem Ohmschen Widerstand (3) aufweist, und über einen Entladezweig, welcher eine zweite Gleichrichteranordnung (4) aufweist, mit einem Energie-speicher (2) verbunden ist, welcher mit einem Bezugspotentialleiter (8) verbunden ist.

2.    Anordnung nach Anspruch 1,   d a d u r c h   g e -   k e n n z e i c h n e t , daß der Energiespeicher (2) aus einem Kondensator besteht.

**FIG 1**

**FIG 2**

**FIG 3**